# EUROPEAN PATENT SPECIFICATION

(11) **EP 4 616 528 B1**
(45) Date of publication and mention of the grant of the patent: **07.10.2026**
(21) Application number: 23822093.3
(22) Date of filing: 06.11.2023
(51) Int. Cl.: H02S 20/24, F24S 25/40, F24S 25/615

(54) **PHOTOVOLTAIC CONVERSION DEVICE**
FOTOVOLTAISCHE UMWANDLUNGSVORRICHTUNG
DISPOSITIF DE CONVERSION PHOTOVOLTAÏQUE

(30) Priority: 11.11.2022 NL 2033516
(43) Date of publication of application: 17.09.2025
(73) Proprietor: Reibex B.V., 2421 NN Nieuwkoop (NL)
(72) Inventor: SCHUURMAN, Adrianus Franciscus Gerardus, 2421 NN Nieuwkoop (NL); SCHUURMAN, Jacobus Jan, 2421 NN Nieuwkoop (NL)
(74) Representative: Jilderda, Anne Ayolt
(86) International application number: PCT/IB2023/061163
(87) International publication number: WO 2024/100517

(56) References cited:
- EP-A1- 2 662 646
- DE-U1- 202008 000 237
- DE-U1- 202009 005 202
- US-A1- 2010 175 337
- US-A1- 2016 032 590
- US-A1- 2016 248 369

## Description

The present invention relates to a photovoltaic conversion device for photovoltaically producing energy from ambient light, comprising a system of photovoltaic conversion panels on a roof surface of a building, wherein the panels are mounted directly or indirectly on mounting rails and the mounting rails are connected directly or indirectly to the roof surface with interposing of at least one fastening device.

Such photovoltaic conversion panels are also referred to simply as solar panels, and are increasingly popular in the context of producing energy from sunlight. Each panel comprises here a number of individual photovoltaic cells, these each providing for a part of the yield of the panel. Roofs of buildings are particularly suitable as surface on which such panels can be placed. The panels are therefore often arranged on an existing or new roof surface as a system of a number of such panels. European patent application 2.662.646 and US patent application 2026/248369 describe examples of invasive mounting systems that may be used for mounting an assembly to a roof, all depending on screws that penetrate the roof surface and hence the roof's integrity. In order not to affect an original water barrier of the roof surface here, use is preferably made here of a non-invasive manner of mounting, i.e. a mounting that leaves the original water barrier intact.

A known non-invasive fixing comprises one or more ballast bodies with which the device is loaded. This can be one or more heavy bodies, for instance of concrete, or a cloth on which a material for spreading, such as gravel or grit, is arranged. German utility model DE 20 2009 005202 discloses a light weight wedge shaped block which is welded to the roof by an intervening bituminous layer. US patent application US 2020/175337 describes a roof PV panel assembly wherein support blocks of the installation rest on slip pads that are kept in place by friction.

These methods, however, have the drawback that a significantly greater weight is exerted on the roof surface thereby, this in some cases exceeding a maximum permissible roof load.

The present invention therefore has for its object, among others, to provide a device of the type described in the preamble which has a less significant impact on the overall load on the roof surface.

In order to achieve the stated object a photovoltaic conversion device of the type described in the preamble has the feature according to the invention that the at least one fastening device comprises a number of form-retaining disc bodies, each with at least one fastening member, that the disc bodies of the number of disc bodies each comprise a flat flanged edge which is provided with a system of perforations, that a meltable flap, which is adhered to the roof surface and to at least the flanged edge of the disc body, is provided between each disc body of the number of disc bodies and the roof surface, and that material of the flap has passed through the perforations of the flanged edge.

The device is thus fixed onto the roof surface by one or more of such disc bodies, which are adhered to the roof surface by means of the flap. Surprisingly, it has been found that the combined adhesion of the disc bodies alone provides sufficient hold to secure the whole device to the roof surface in durable and reliable manner. Any impact on an existing roof covering is avoided here by addition of the flap, the material of which is as it were partially sacrificed for the purpose of penetrating the perforations.

In a particular embodiment the conversion device is characterized according to the invention in that the fastening member is received directly by the mounting rail and is connected thereto. The fastening members of successive disc bodies are here aligned with each other in accordance with the course of the mounting rail. The mounting rail can thus be mounted directly on the disc bodies.

In the event that a mounting rail and a fastening member of the fastening device do not lie in line with each other the invention provides a further particular embodiment of the conversion device according to the invention with the feature that the mounting rail is connected to the fastening member of the at least one fastening device with interposing of a connecting device. The connecting device thus bridges an intermediate space between the fastening member and the mounting rail.

The connecting device can be of varying nature. In a first further particular embodiment the conversion device is characterized according to the invention in that the connecting device comprises a mounting bracket which connects the mounting rail to the fastening device. The mounting bracket is here adapted to a fixed intermediate space between a disc body on one side and the mounting rail on the other. A more flexible setup is provided by a second further particular embodiment of the conversion device according to the invention, characterized in that the connecting device comprises an elongate body, particularly an elongate profile, more particularly an extruded profile, which connects the mounting rail to an adjacent mounting rail, wherein the fastening member of the fastening device is received by the elongate body and is connected thereto. The fastening device can here be coupled to the elongate body over a whole length thereof and thus fix the mounting rails with interposing thereof.

In a further embodiment the conversion device according to the invention has the feature that the adjacent mounting rail is connected to a further fastening device of the at least one fastening device with interposing of the elongate body, wherein the fastening member of the further fastening device is likewise received by the elongate body and is connected thereto. A firm connection between the successive mounting rails and the panels arranged thereon is thus brought about by means of a number of fastening devices according to the invention.

Although the disc bodies can per se be embodied in various ways, a preferred embodiment of the conversion device has the feature according to the invention that the disc body comprises a hollow cup which is particularly formed in the disc body, wherein a proximal outer end of the at least one fastening member is received in a cavity of the hollow cup directed toward the roof surface. The hollow cup thus provides space for the proximal outer end of the fastening member which protrudes thereabove so as to bring about a connection. The fastening member is for instance a screw bolt or a threaded end, which is received with an outer end in the cup and is fixed therein while an opposite outer end protrudes above the cup for the purpose of a manually realizable screw connection.

With a view to mounting of the conversion device on a roof surface a preferred embodiment thereof has the feature according to the invention that the disc-like body takes a corrosion-proof or at least corrosion-resistant form, and more particularly that the disc-like body is made at least substantially from preserved steel, stainless steel or aluminium. The material applied therein contributes to the weather resistance and lifespan of the device.

For the flap under the disc body use is advantageously made of a bituminous roof covering material, wherein the material to be applied is preferably adapted to that of the water barrier on the roof surface, usually from a group of PVC, EPDM and bitumen.

The invention will be further elucidated hereinbelow with reference to a number of exemplary embodiments and an accompanying drawing. In the drawing:
- Figure 1: is an isometric view of a first exemplary embodiment of a conversion device according to the invention;
- Figure 2: is an isometric view of a second exemplary embodiment of a conversion device according to the invention;
- Figure 3: is an isometric view of a third exemplary embodiment of a conversion device according to the invention;
- Figure 4: is an isometric view of a disc body as applied in the conversion device of each of the figures 1, 2 and 3;
- Figure 5: is a top view of the disc body of figure 4; and
- Figure 6: is the disc body of figure 4 in mounted state on a roof surface, in cross-section.

It is otherwise noted here that the figures are purely schematic and not always drawn to (the same) scale. Some dimensions in particular may be exaggerated to greater or lesser extent for the sake of clarity. Corresponding parts are designated in the figures with the same reference numeral.

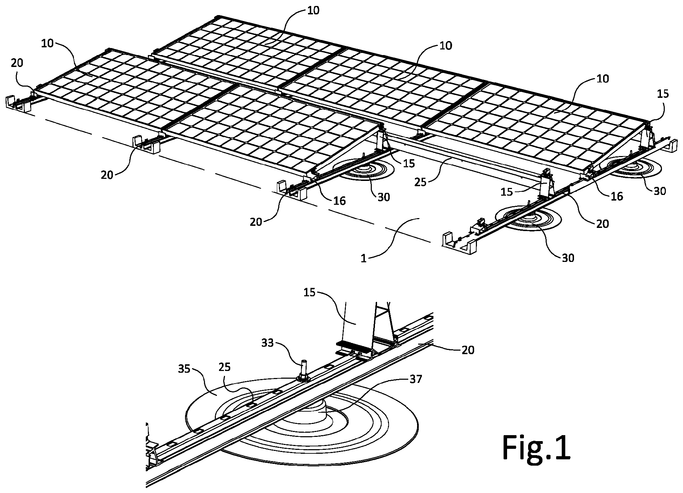

Figure 1 shows schematically a roof surface 1 on which a photovoltaic conversion device for photovoltaically producing energy from sunlight is arranged. The conversion device comprises a system of individual conversion panels 10, so-called solar panels, each lying on mounting supports 15, 16 which are provided for this purpose and which position the panel 10 supported thereby at an ideal angle relative to the sun. Each of the panels 10 is connected firmly and reliably to a mounting rail 20 on either side with interposing of such mounting supports 15, 16.

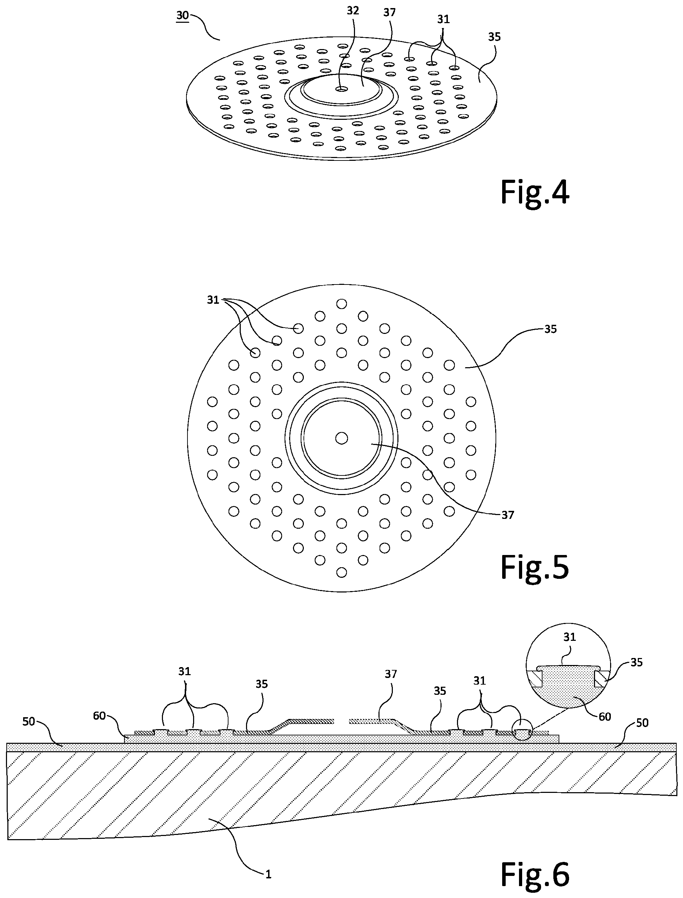

The mounting rails lie parallel to each other and are mutually connected by means of transverse beams 25 which impose a mutual pitch between the mounting rails which corresponds with a width of the panels 10. In this embodiment the mounting rails 20 are connected to the roof surface 1 by means of a set of fastening devices 30, these each comprising an aluminium disc body 30, see also figures 4-6. The disc bodies 30 each rest with a flat flanged edge 35 on the base surface.

Figure 4 shows the disc body in more detail and has a cross-section in the order of 30 centimetres. A system of a large number of perforations 31, each with a cross-section of about a centimetre, is provided in the flanged edge 35. Centrally, the disc body comprises a hollow cup 37 which provides space to a proximal outer end of stainless steel screw bolt 33, see figure 6, a free outer end of which extends outside the cup 37 via a central drilled hole 32 in the disc body. In this embodiment use is made for the bolt 33 of a size M10 with a length of about 10 centimetres, although a thinner, thicker, longer or shorter bolt 33 can also be opted for if desired. A top view of the disc body is shown in figure 5.

Figure 6 shows a cross-section of such a disc body 30 mounted on roof surface 1. For this purpose a flap 60 of a bituminous roof covering material is arranged between disc body 30 and roof surface 1. In the figure an existing water barrier of the roof surface is also drawn in the form of a watertight layer 50 of the same or a different common roof covering material extending over the whole roof surface 1. In order to mount the fastening device 30 the existing roof covering 50 is heated on site in a manner usual for a roofer so as to soften the top layer thereof. The same is done to the rear side of the flap 60, after which the flap is placed with the slightly flowing rear side onto the still sticky roof covering 60 and is pressed down firmly with a roller.

The flap is then heated on the visible side using a burner or the like until the material of the flap 60 begins to flow at least superficially. The disc body is optionally likewise heated and then pressed into the still flowing mass of the flap. The flowing material of the flap now penetrates through the perforations 31 of flanged edge 35 and protrudes laterally to some extent thereabove, as visible in figure 6. This provides for a particularly firm connection between flap 60 and the disc body.

The above is repeated for all the mounting spots 30, wherein the disc bodies 30 are mutually aligned in accordance with the course of the mounting rails 20 to be mounted thereon. The mounting rails 20 are then placed over the disc bodies. The screw bolts 33 of the individual fastening devices 30 are now received with their free outer ends directly in openings 25 in mounting rails 20 provided for this purpose, see figure 1, and secured with a nut and washer in usual manner. The rails 20 are now united rigidly with the roof surface 1 without the original roof covering 50 having to be broken or perforated for this purpose. Finally, the mounting supports 15, 16 and the panels 10 are arranged together with any optional electronics and electrical connections in order to realize the photovoltaic conversion device shown in figure 1.

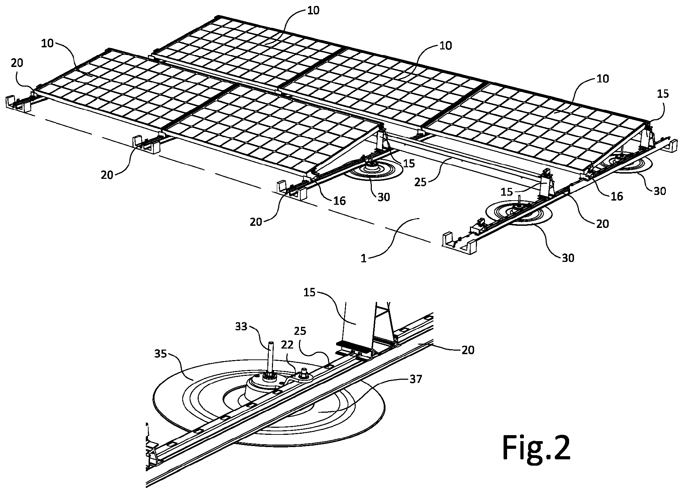

Figure 2 shows an alternative embodiment of the device of figure 1. The device of figure 2 corresponds substantially wholly with that of figure 1 here, particularly in respect of the adhesion of the fastening devices 30 to the roof surface 1, 50. Reference is in this case also made for this purpose to that described above with reference to figures 4-6. A difference is however that in this case the mounting spots 30 lie in line with mounting rails 20, but are placed at a determined distance alongside thereof. In order to bridge this distance the rails 20 are in each case connected via a mounting bracket 22 to an adjacent mounted device 30. The bracket has two openings, a first of which is aligned with an opening 25 in the mounting rail and the other of which receives the free outer end of screw bolt 33 protruding from disc body 30. Not only is an intermediate distance bridged here, but also a height difference between mounting rail 20 and the cup 37 of disc body 30. The two outer ends are fastened in usual manner with respectively a nut with washer and carriage bolt with nut and washer.

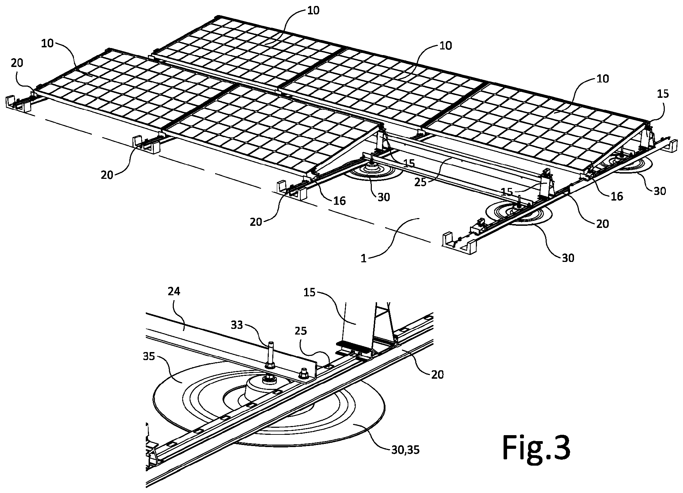

A third exemplary embodiment is finally shown in figure 3. The mounting rails 20 here also lie offset relative to the fastening devices 30. As far as this, this exemplary embodiment is largely the same as that of figure 2. For coupling of mounting rails 20 to mounting spots 30 use is in this case made of an elongate body in the form of an aluminium angle profile 24 which extends over a number of adjacent mounting rails 20 and is connected thereto. A number of fastening devices 30 protrudes with the free outer end of screw bolt 33 through the profile 24 therebetween so as to be connected thereto, and thereby to the roof surface 1, by means of a set of nuts and washers.

Although the invention has been further elucidated above with reference to only several exemplary embodiments, it will be apparent that the invention is by no means limited thereto. On the contrary, many variations and embodiments are still possible within the scope of the invention for a person with ordinary skill in the art. Use is thus in the embodiments made of aluminium as material for the disc body and angle profile, but a different, preferably weather-resistant, material can instead also be opted for for this purpose, such as for instance stainless steel, preserved (galvanized, coated or varnished) steel or a suitable plastic, particularly a (glass) fibre-reinforced plastic.

Use is in the embodiments also in each case made of disc bodies having a round section, although any shape can in principle be opted for therefor. The flap need not be congruent either, but may for instance also protrude outside the disc body or remain slightly within the disc body. Besides round, the perforations or openings in the flanged edge can also take a different form, such as for instance conical, polygonal or oval, in order to provide space and a passage for the melted mass of the flap. Instead of a screw bolt as fastening member, use can also be made of a threaded end which is secured at both outer ends by means of nuts.

The invention is defined by the scope of the appended claims.

## Claims

1. Photovoltaic conversion device for photovoltaically producing energy from ambient light, comprising a system of photovoltaic conversion panels (10) on a roof surface (1,50) of a building, wherein the panels (10) are mounted directly or indirectly on mounting rails (20) and the mounting rails (20) are connected directly or indirectly to the roof surface (1,50) with interposing of at least one fastening device, **characterized in that** the at least one fastening device comprises a number of form-retaining disc bodies (30), each with at least one fastening member (33), that the disc bodies (30) of the number of disc bodies (30) each comprise a flat flanged edge (35) which is provided with a system of perforations (31), that a meltable flap (60), which is adhered to the roof surface (1,50) and to at least the flanged edge (35) of the disc body (30) (30) body, is provided between each disc body (30) of the number of disc bodies (30) and the roof surface (1,50), and that material of the flap (60) has passed through the perforations (31) of the flanged edge (35).

2. Device according to claim 1, **characterized in that** the fastening member (33) is received directly by the mounting rail (20) and is connected thereto.

3. Device according to claim 1, **characterized in that** the mounting rail (20) is connected to the fastening member (33) of the at least one fastening device (30) with interposing of a connecting device (22).

4. Device according to claim 3, **characterized in that** the connecting device comprises a mounting bracket (22) which connects the mounting rail (20) to the fastening device (30).

5. Device according to claim 3, **characterized in that** the connecting device comprises an elongate body (24), particularly an elongate profile, more particularly an extruded profile, which connects the mounting rail (20) to an adjacent mounting rail (20), wherein the fastening member (33) of the fastening device (30) is received by the elongate body (24) and is connected thereto.

6. Device according to claim 5, **characterized in that** the adjacent mounting rail (20) is connected to a further fastening device (30) of the at least one fastening device with interposing of the elongate body (25), wherein the fastening member (33) of the further fastening device is likewise received by the elongate body and is connected thereto.

7. Device according to one or more of the preceding claims, **characterized in that** the disc body (30) comprises a hollow cup (37) which is particularly formed in the disc body (30), wherein a proximal outer end of the at least one fastening member (33) is received in a cavity of the hollow cup directed toward the roof surface (1,50).

8. Device according to one or more of the preceding claims, **characterized in that** the disc-like body (30) takes a corrosion-proof or at least corrosion-resistant form.

9. Device according to claim 8, **characterized in that** the disc-like body (30) is made at least substantially from preserved steel, stainless steel or aluminium.

10. Device according to one or more of the preceding claims, **characterized in that** the flap (60) comprises a bituminous roof covering material.

## Patentansprüche

1. Photovoltaische Umwandlungsvorrichtung zum photovoltaischen Erzeugen von Energie aus Umgebungslicht, umfassend ein System von photovoltaischen Umwandlungspaneelen (10) auf einer Dachoberfläche (1, 50) eines Gebäudes, wobei die Paneele (10) direkt oder indirekt auf Montageschienen (20) montiert sind und die Montageschienen (20) direkt oder indirekt unter Zwischenschaltung wenigstens einer Befestigungsvorrichtung mit der Dachoberfläche (1, 50) verbunden sind, **dadurch gekennzeichnet, dass** die wenigstens eine Befestigungsvorrichtung eine Anzahl von formstabilen Scheibenkörpern (30) umfasst, jeder mit wenigstens einem Befestigungselement (33), dass die Scheibenkörper (30) der Anzahl von Scheibenkörpern (30) jeweils einen flachen Flanschrand (35) umfassen, welcher mit einem System von Perforationen (31) versehen ist, dass zwischen jedem Scheibenkörper (30) der Anzahl von Scheibenkörpern (30) und der Dachoberfläche (1, 50) eine schmelzbare Lasche (60) vorgesehen ist, welche an der Dachoberfläche (1, 50) und wenigstens an dem Flanschrand (35) des Scheibenkörpers (30) angeklebt ist, und dass Material der Lasche (60) durch die Perforationen (31) des Flanschrandes (35) hindurchgetreten ist.

2. Vorrichtung nach Anspruch 1, **dadurch gekennzeichnet, dass** das Befestigungselement (33) direkt von der Montageschiene (20) aufgenommen ist und mit dieser verbunden ist.

3. Vorrichtung nach Anspruch 1, **dadurch gekennzeichnet, dass** die Montageschiene (20) unter Zwischenschaltung einer Verbindungsvorrichtung (22) mit dem Befestigungselement (33) der wenigstens einen Befestigungsvorrichtung (30) verbunden ist.

4. Vorrichtung nach Anspruch 3, **dadurch gekennzeichnet, dass** die Verbindungsvorrichtung eine Montagehalterung (22) umfasst, welche die Montageschiene (20) mit der Befestigungsvorrichtung (30) verbindet.

5. Vorrichtung nach Anspruch 3, **dadurch gekennzeichnet, dass** die Verbindungsvorrichtung einen länglichen Körper (24), insbesondere ein längliches Profil, genauer ein Strangpressprofil, umfasst, welcher die Montageschiene (20) mit einer benachbarten Montageschiene (20) verbindet, wobei das Befestigungselement (33) der Befestigungsvorrichtung (30) von dem länglichen Körper (24) aufgenommen ist und mit diesem verbunden ist.

6. Vorrichtung nach Anspruch 5, **dadurch gekennzeichnet, dass** die benachbarte Montageschiene (20) unter Zwischenschaltung des länglichen Körpers (24) mit einer weiteren Befestigungsvorrichtung (30) der wenigstens einen Befestigungsvorrichtung verbunden ist, wobei das Befestigungselement (33) der weiteren Befestigungsvorrichtung entsprechend von dem länglichen Körper aufgenommen ist und mit diesem verbunden ist.

7. Vorrichtung nach einem oder mehreren der vorhergehenden Ansprüche, **dadurch gekennzeichnet, dass** der Scheibenkörper (30) einen hohlen Becher (37) umfasst, welcher insbesondere in dem Scheibenkörper (30) ausgebildet ist, wobei ein proximales äußeres Ende des wenigstens einen Befestigungselements (33) in einem zur Dachoberfläche (1, 50) gerichteten Hohlraum des hohlen Bechers aufgenommen ist.

8. Vorrichtung nach einem oder mehreren der vorhergehenden Ansprüche, **dadurch gekennzeichnet, dass** der scheibenförmige Körper (30) korrosionsfest oder wenigstens korrosionsbeständig ausgebildet ist.

9. Vorrichtung nach Anspruch 8, **dadurch gekennzeichnet, dass** der scheibenförmige Körper (30) wenigstens im Wesentlichen aus konserviertem Stahl, rostfreiem Stahl oder Aluminium hergestellt ist.

10. Vorrichtung nach einem oder mehreren der vorhergehenden Ansprüche, **dadurch gekennzeichnet, dass** die Lasche (60) ein bituminöses Dachabdeckungsmaterial umfasst.

## Revendications

1. Dispositif de conversion photovoltaïque destiné à produire de l'énergie à partir de la lumière ambiante, comprenant un système de panneaux de conversion photovoltaïque (10) disposés sur la surface de toiture (1,50) d'un bâtiment, les panneaux (10) étant montés directement ou indirectement sur des rails de fixation (20) et les rails de fixation (20) sont reliés directement ou indirectement à la surface de toiture (1,50) par l'intermédiaire d'au moins un dispositif de fixation, **caractérisé par le fait que** ledit au moins un dispositif de fixation comprend un certain nombre de corps de disque indéformables (30), chacun doté d'au moins un élément de fixation (33), **par le fait que** les corps de disque (30) de ladite pluralité de corps en forme de disque (30) comportent chacun un bord à bride plat (35) muni d'un système de perforations (31), **par le fait qu'**un rabat thermofusible (60), qui est collé à la surface de toiture (1,50) et au moins au bord à rebord (35) du corps en forme de disque (30), est prévu entre chaque corps de disque (30) parmi lesdits corps de disque (30) et la surface de toiture (1,50), et en **par le fait que** le matériau du rabat (60) a traversé les perforations (31) du bord à rebord (35).

2. Dispositif selon la revendication 1, **caractérisé par le fait que** l'élément de fixation (33) est logé directement dans le rail de montage (20) et y est relié.

3. Dispositif selon la revendication 1, **caractérisé par le fait que** le rail de montage (20) est relié à l'élément de fixation (33) dudit au moins un dispositif de fixation (30) par l'intermédiaire d'un dispositif de raccordement (22).

4. Dispositif selon la revendication 3, **caractérisé par le fait que** le dispositif de raccordement comprend un support de fixation (22) qui permet de relier le rail de montage (20) au dispositif de fixation (30).

5. Dispositif selon la revendication 3, **caractérisé par le fait que** le dispositif de raccordement comprend un corps allongé (24), notamment un profilé allongé, plus particulièrement un profilé extrudé, qui permet de relier le rail de montage (20) à un rail de montage adjacent (20), l'élément de fixation (33) du dispositif de fixation (30) étant logé dans le corps allongé (24) et relié à celui-ci.

6. Dispositif selon la revendication 5, **caractérisé par le fait que** le rail de montage adjacent (20) est relié à un autre dispositif de fixation (30) parmi les au moins un dispositif de fixation, avec interposition du corps allongé (25), l'élément de fixation (33) de ce dispositif de fixation supplémentaire étant également logé dans le corps allongé et relié à celui-ci.

7. Dispositif selon une ou plusieurs des revendications précédentes, **caractérisé par le fait que** le corps de disque (30) comprend une coupelle creuse (37) qui est notamment formée dans le corps de disque (30), une extrémité externe proximale du ou des éléments de fixation (33) étant logée dans une cavité de la coupelle creuse orientée vers la surface de toit (1,50).

8. Dispositif selon une ou plusieurs des revendications précédentes, **caractérisé par le fait que** le corps de disque (30) se présente sous une forme résistante à la corrosion ou au moins résistante à la corrosion.

9. Dispositif selon la revendication 8, **caractérisé par le fait que** le corps de disque (30) est constitué, au moins en grande partie, d'acier trempé, d'acier inoxydable ou d'aluminium.

10. Dispositif selon une ou plusieurs des revendications précédentes, **caractérisé par le fait que** le rabat (60) comprend un matériau de couverture de toiture bitumineux.
